# EUROPÄISCHE PATENTSCHRIFT

(11) **EP 1 536 917 B1**
(45) Veröffentlichungstag und Bekanntmachung des Hinweises auf die Patenterteilung: **30.11.2005**
(21) Anmeldenummer: 04760180.2
(22) Anmeldetag: 30.06.2004
(51) Int. Cl.: B24B 15/00

(54) **VERFAHREN ZUR HERSTELLUNG VON VENTILSITZEN UND VENTIL**
METHOD FOR THE PRODUCTION OF VALVE SEATS, AND VALVE
PROCEDE DE PRODUCTION DE SIEGES DE SOUPAPES ET SOUPAPE

(30) Priorität: 01.07.2003 EP 03014909
(43) Veröffentlichungstag der Anmeldung: 08.06.2005
(73) Patentinhaber: Gehring GmbH & Co. KG, 73760 Ostfildern (DE)
(72) Erfinder: FLORES, Gerhard, 73760 Ostfildern (DE); ZANG, Harald, 70329 Stuttgart (DE); WEBER, Alexander, 73760 Ostfildern (DE); ZOUDLIK, Carsten, 72636 Frickenhausen (DE)
(74) Vertreter: Dreiss, Uwe
(86) Internationale Anmeldenummer: PCT/EP2004/007062
(87) Internationale Veröffentlichungsnummer: WO 2005/000524

(56) Entgegenhaltungen:
- EP-B- 0 955 128
- DE-A- 19 757 117
- US-A- 5 954 312
- US-A1- 2002 040 523

## Beschreibung

Die Erfindung betrifft ein Ventil und ein Verfahren zur Herstellung von Ventilsitzen.

Ein Ventil wird allgemein von einem Ventilsitz, der eine Durchgangsbohrung umgibt, und einem Ventilverschlussglied gebildet, das im "Ventil offen"-Zustand den Fluss eines Mediums durch die Durchgangsbohrung freigibt und diese im "Ventil geschlossen"-Zustand verschließt. Ventilsitze werden in der Praxis oft mit kegeliger Dichtfläche hergestellt, an welcher die ebenfalls kegelig ausgebildete Ventilnadel, die das Ventilverschlussglied bildet, vollflächig anliegt. Selbst bei hoher Bearbeitungsgenauigkeit ist eine hohe Dichtigkeit bei Drücken über einigen 100 bar meist nicht gegeben. Ursache ist unter anderem, dass die Bearbeitung, die durch Schleifen erfolgt, bedingt, dass ein Schleifkorper eine Rotations- und eine Translationsbewegung ausfuhrt. Dadurch entstehen Riefen mit einer gewissen Steigung und somit ein Labyrinth kommunizierender Riefen, durch welche hindurch eine Leckage stattfindet.

Aus der EP 0 955 128 B1 ist ein Verfahren zur Herstellung eines Dichtsitzes zwischen einer Ventilkugel und einem Ventilkörper mit konischem Ventilsitz bekannt. Dabei wird ein Ventilkorper mit einem konisch geschliffenen Ventilsitz für die Ventilkugel (Ventilverschlussglied) in einem rotierend antreibbaren Werkstuckhalter eingespannt. Ein zylindrischer Schleifstein wird fur eine Feinschleifbearbeitung mit einem Einsatz, der radiale Bewegungen des Schleifsteins zulässt, in den Werkzeughalter eingesetzt, der unter einem Anstellwinkel von 1° bis 10° schräg zur Rotationsachse in einen Werkstückhalters eingesetzt ist, wodurch eine im Längsschnitt kreisbogenförmige Ventilsitzfläche in den konischen Ventilsitz eingearbeitet wird. Durch dieses Verfahren entsteht eine Sitzfläche, in die sich die Dichtkugel muldenartig eingräbt. Linienkontakt soll vermieden werden. Daher ist die Kontaktfläche relativ groß. Der an der von der Sitzfläche kontaktierten Teilfläche der Kugel anliegende Druck ist daher entsprechend gering.

Aus der DE 197 57 117 A1 ist ein Verfahren zur Herstellung eines Ventilsitzkörpers fur ein Brennstoffeinspritzventil bekannt, bei dem der Ventilsitzbereich und Fuhrungsabschnitte gleichzeitig mittels eines Bearbeitungswerkzeugs in Form einer Masterkugel bearbeitet werden. Eine linienformige Abdichtungsfläche des Sitzes zur Kugel wird dadurch erreicht, dass ein schmaler Wulst im Ventilsitz vorgesehen ist, der ca. 0,1 mm über die umgebenden Fläche erhaben ist. Diese Maßnahmen erfordern teuere Bearbeitungsschritte; wird der Wulst auch nur minimal beschädigt, etwa durch kleinste Metallpartikel, ist das Ventil undicht. Aus der DE 44 416 23 ist ein Verfahren zum Schleifen von kegeligen Ventilsitzen bekannt, bei dem die Durchgangsbohrung gehont wird, die dann als Führung fur das Werkzeug zum Honen des kegeligen Ventilsitzes dient.

Weitere bekannte Verfahren zur Bearbeitung von Ventilflächen beziehungsweise Ventilen sind aus der US 5 954 312 A, der US 2002/0040523 A1 und der DE 100 46 304 C1 bekannt.

Der Erfindung liegt die Aufgabe zugrunde, ein Ventil mit verbesserten Dichteigenschaften und ein verbessertes Verfahren zur Herstellung solcher Ventilsitze zu schaffen. Insbesondere soll ein Kriechen des abzudichtenden Mediums durch die Bearbeitungsriefen verhindert und dadurch die Dichtwirkung verbessert werden.

Diese Aufgabe wird durch ein Ventil mit den Merkmalen des Anspruchs 1 und durch ein Verfahren mit den Merkmalen des Anspruchs 11 gelöst.

Die erfindungsgemäß vorgesehene Vielzahl konzentrischer Profilerhebungen der Ventilsitzfläche erfahren beim Andrücken an das Ventilverschlussglied eine elastische Verformung, da die Rauhtiefe des Ventilverschlussglieds deutlich niedriger als die der Ventilsitzfläche ist. Durch diese elastische Verformung entstehen schmale konzentrische Ventilsitzflächen, die eine Leckage durch Kriechen des Mediums entlang der Bearbeitungsriefen des Ventilsitzes deutlich verringern, so dass die evtl. noch stattfindenden Leckagen im Toleranzbereich bleiben. Die genannten Profilerhebungen werden durch das erfindungsgemäße Verfahren geschaffen.

Es ergeben sich dabei erhebliche Vorteile, u. a. bei Einspritzpumpen für Motoren. In einem Einspritzpumpengehäuse mit mehreren Ventilsitzen ist die Dichtheit gegenüber einem Systemdruck von bis zu über 2000 bar der entscheidende Funktionsparameter. Die Dichtheit wird allgemein definiert als Leckagemenge je Zeiteinheit unter bestimmten Betriebsbedingungen wie Druck, Temperatur und Dichte des Mediums.

Bei Verwendung einer Kugel als Ventilverschlussglied erfolgt erfindungsgemäß ein Anliegen entlang mehreren konzentrischen, schmalen und daher praktisch linienförmigen Dichtflächen. Es entsteht eine hohe Flächenpressung und damit eine elastische Verformung der einzelnen Profilerhebungen des Ventilsitzes, an denen die Kugel anliegt. Geometrisch ist dies durch sehr hohe Rundheitsanforderungen an die Kugel von unter 1,0 µm möglich. Innerhalb dieser Toleranz kann die Elastizität der Profilerhebungen auch mögliche Makroformfehler der Rundheit ausgleichen.

Das beschriebene und beanspruchte Verfahren ergibt konzentrische Bearbeitungsriefen an der Ventilsitzfläche. Sie haben die gleiche Verlaufsrichtung wie der Anlagekreis der Kugel. Die Bearbeitungsriefen ebenso wie die dazwischen beim Honen entstehenden Profilerhebungen weisen keine Steigung senkrecht zur linienförmigen Anlageflache der Kugel beziehungsweise des Ventilverschlussgliedes an der Ventilsitzfläche mehr auf. In spiralförmigen Riefen laufende Leckageströme sind damit ausgeschlossen. Für die Dichtheit ist die Konzentrizität der Profilerhebungen, eine hohe Rundheit der Kugel und die elastische Verformbarkeit der Profilerhebungen des Ventilsitzes wichtig.

Gemäß einer bevorzugten Weiterbildung der Erfindung wird das Honschleifen in mehreren aufeinander folgenden Operationen durchgeführt. Dies hat den Vorteil, dass in jeder Operation angepasste Bearbeitungsbedingungen wie beispielsweise unterschiedliche Werkzeuge zum Einsatz kommen können. Dabei ist es insbesondere zweckmäßig, dass in jeder Operation die Rauhheitsprofile der vorhergehenden Honschleif-Operation mit einem Werkzeug mit feinerem Schneidkorn abgetragen werden. Darüber hinaus ist es vorteilhaft, dass das Werkzeug periodisch außer Arbeitseingriff gebracht und die Bearbeitungsstelle mit Kühlschmierstoff angeströmt und das anhaftende abgetragene Material abgeführt wird. Dies ergibt eine besonders wirksame Kühlung und Schmierung in dem zu bearbeitenden Bereich.

Es hat sich gezeigt, dass in Anpassung an die jeweiligen Bearbeitungsbedingungen unterschiedliche Drehzahlen des Werkzeugs zweckmäßig sind, wobei das Werkzeug beim Honschleifen mit einer Drehzahl von 500 min⁻¹ bis 6000 min⁻¹ rotiert. Im Anschluss an die Honschleifbearbeitung kann eine Entgratbearbeitung erfolgen, insbesondere mit Diamantsplintwerkzeugen und/oder schleifkornhaltigen Bürsten. Um den zunächst in die kegelige Grundform gebrachten Ventilsitz in geeigneter Weise durch das Honschleifen bearbeiten zu können, ist es zweckmäßig, durch die Vorbearbeitung ein solches Maß vorzugeben, das im Bearbeitungsschritt der Feinbearbeitung eine axiale Zugabe des Materials am Ventilsitz von ca. 50 µm bis 90 µm abgetragen wird. Entscheidend ist die axiale Zugabe, die das Vorbearbeitungsprofil vollständig abträgt.

Bei der Feinbearbeitung kann es durchaus vorkommen, dass die Achse der rotierenden Spindel der Bearbeitungsmaschine nicht absolut identisch mit der Achse des Ventilsitzes ist. Es wird daher als vorteilhaft angesehen, dass während des Honschleifens der Kopf des Werkzeugs bezogen auf die Werkzeugaufnahme ausgelenkt wird. Die Auslenkung kann dabei durch Schwenken des Werkzeugs um einen Gelenkpunkt der Werkzeugaufnahme oder durch elastische Verformung eines Werkzeugschaftes erfolgen. Um die Bearbeitungsgeschwindigkeit zu erhöhen, kann es zweckmäßig sein, dass beim Honschleifen das Werkzeug und das Werkstuck gegenläufig angetrieben und bewegt werden.

Ausführungsbeispiele der Erfindung werden nachstehend anhand der Zeichnung näher erläutert. In der Zeichnung zeigen:
- Figur 1: eine Prinzipdarstellung eines Ventils,
- Figur 2: eine bearbeitete Sitzflache in vergrößerter Darstellung,
- Figur 3: die schematische Darstellung eines Schnitts durch einen Ventilsitz und einer Kugel als Ventilschließglied in der geöffneten Stellung,
- Figur 4: eine Darstellung gemäß Figur 3 in der geschlossenen Stellung,
- Figur 5: die Seitenansicht eines Werkzeugs mit kegeliger Arbeitsfläche,
- Figur 6: einen Schnitt durch das Werkzeug gemäß Figur 5,
- Figur 7: eine vergroßerte Darstellung eines Abschnitts der Arbeitsfläche am Werkzeug gemaß Figur 5,
- Figur 8: die Struktur eines mehrschichtigen, im Hockvakuum verlöteten Schleifkörpers;
- Figuren 9(a), 9(b), 9(c): einen keramischen oder metallisch gebundenen mehrschichtigen Schleifkörper in schematischer Darstellung im scharfen Zustand vor Abnutzung (Figur 9(a)), in abgenutztem Zustand (Figur 9(b)) und in durch Abrichten erneut scharfem Zustand (Figur 9(c)),
- Figur 10: eine perspektivische Ansicht eines Abrichtvorganges, bei dem ein abgenutzter mehrschichtiger Schleifkörper mittels einer Abrichtscheibe abgerichtet wird,
- Figur 11: eine Ansicht in Richtung der Pfeile XI-XI in Figur 10,
- Figur 12: ein Werkzeug mit einer elastischen Gelenkstelle im Werkzeugschaft,
- Figur 13: eine schematische Darstellung eines Werkzeugs für die Bearbeitung einer ebenen Dichtfläche,
- Figur 14: ein Ventil mit einer nach Figur 14 bearbeiteten Dichtfläche.

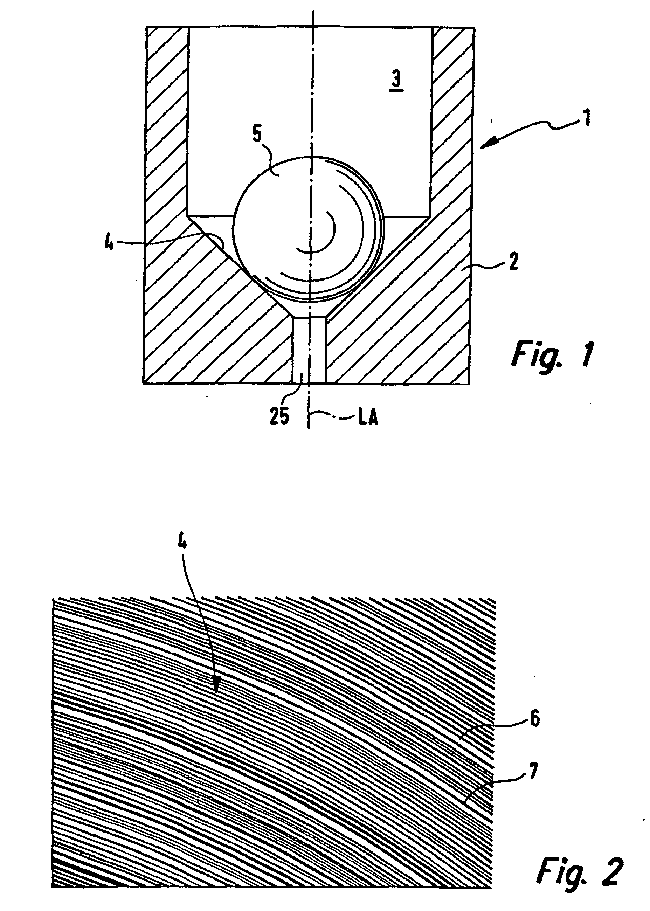

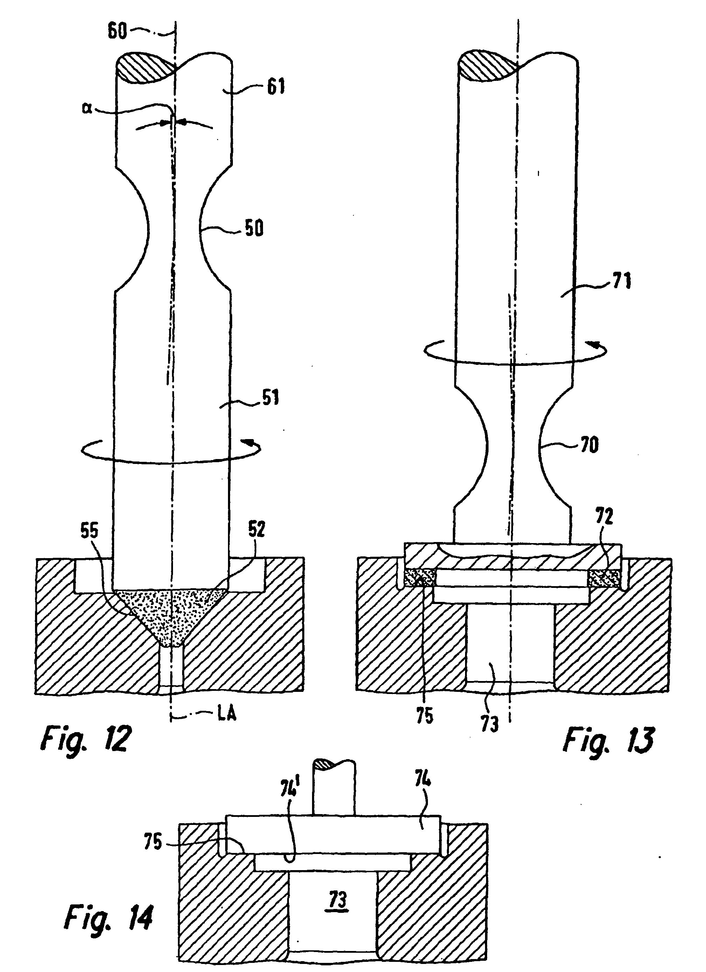

In Figur 1 ist eine Prinzipdarstellung eines Längsschnittes durch ein Ventil 1 gezeigt. Das Ventil 1 besteht aus einem Gehäuse 2, in dem eine Ventilkammer 3 gebildet ist. Die Ventilkammer 3 wird auf einer Seite von einem keglig gestalteten Ventilsitz 4 begrenzt, wobei in der in Figur 1 gezeigten Ausführung der Kegelwinkel 90° beträgt. In der Mitte des Ventilsitzes 4 befindet sich die Durchgangsbohrung 25. Selbstverständlich kommen auch hiervon abweichende Kegelwinkel in Betracht (siehe auch abweichend davon Figur 13). In der Ventilkammer 3 befindet sich ein Ventilschließglied 5, das im vorliegenden Fall eine Kugel ist. Die Kugel ist in der Ventilkammer 3 beweglich gehalten und kann vom Ventilsitz 4 abgehoben werden, wodurch das Ventil 1 geöffnet wird. Die in Figur 1 gezeigte Darstellung zeigt den geschlossenen Zustand des Ventils. Mit dem Bezugszeichen LA ist die Längsachse durch die Durchgangsbohrung 25 bezeichnet.

In Figur 2 ist ein Ausschnitt einer mittels Honen bearbeiteten Fläche des Ventilsitzes 4 in vergrößerter Darstellung gezeigt, wobei eine Vielzahl von kreisbogenförmigen Riefen 6 und Profilerhebungen 7 sichtbar sind, die in Gänze kreisförmig und konzentrisch ausgebildet sind. Die Konzentrizität bezieht sich auf die Längsachse LA des Ventils 1. Die Riefen 6 und die Profilerhebungen 7 entstehen bei der Feinbearbeitung durch Honschleifen, wobei gerade die Tatsache, dass sich beim Honen zwischen den durch die Bearbeitung entstehenden Riefen die Profilerhebungen ausbilden, ausgenutzt wird. Die Rundheit des kegeligen Ventilsitzes nach dem Honschleifen ist 1,0 µm oder kleiner.

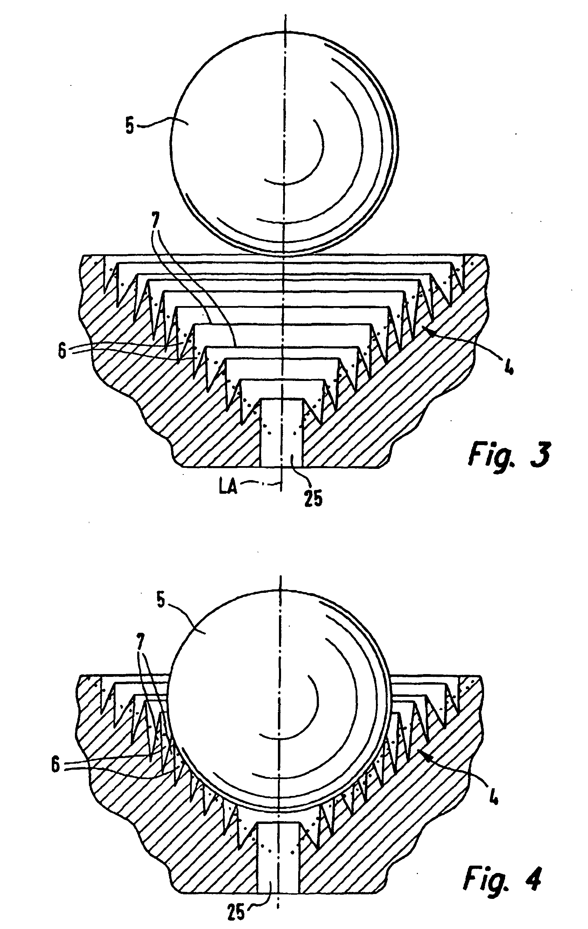

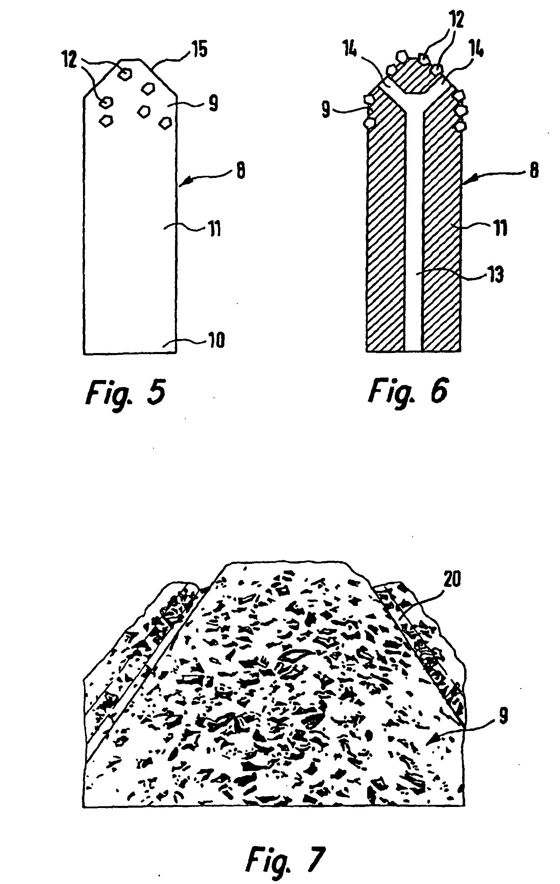

In Figur 3 ist die prinzipielle Ausgestaltung des Ventilsitzes 4 mit Riefen 6 und Profilerhebungen 7 als Längsschnitt dargestellt. Die als Ventilschließglied 5 dienende Kugel befindet sich in einem Abstand zum Ventilsitz 4, so dass das Ventil geöffnet ist. Der Ventilsitz 4 weist eine Vielzahl von konzentrisch zur Längsachse LA verlaufende Riefen 6 und Profilerhebungen 7 auf. Sie haben eine bestimmte Rauhtiefe, die unter anderem dadurch gegeben ist, dass die Profilerhebungen 7 unterschiedlich weit vorstehen. Die Rauhheit R_{z} der bearbeiteten Fläche des Ventilsitzes 4 beträgt nach dem Honschleifen beispielsweise 4 - 8 µm. Die Rauhheit des Ventilsitzes muss so groß sein, dass eine elastische Verformung der Profilspitzen möglich ist, durch die, wie im nachstehenden Abschnitt erläutert, eine verbesserte Abdichtung mit einem angedrückten Ventilschließglied entsteht und auch Rundheitsfehler ausgeglichen werden. Die Rauhheit R_{z} der Kugel, die in Figur 3 und 4 das Ventilschließglied 5 bildet, muss deutlich kleiner sein als die Rauhheit der Oberfläche des Ventilsitzes 4. Sie beträgt beispielsweise ca. 1 µm R_{z}.

Die Figur 4 zeigt eine Anordnung gemäß Figur 3, jedoch im geschlossenen Zustand des Ventils, das heißt, dass das Ventilschließglied 5 gegen den Ventilsitz 4 gedrückt wird. Dabei liegt die Kugel 5 mit ihrer Oberfläche, die eine geringere Rauhtiefe als der Ventilsitz 4 hat, an mehreren Profilerhebungen 7 an, wobei dies im gezeigten Ausführungsbeispiel funf Profilerhebungen 7 sind. Diese Anlage an mehreren Profilerhebungen 7 ist dadurch möglich, dass aufgrund der Gestaltung der Profilerhebungen 7 diese eine gewisse Elastizität aufweisen und somit infolge der durch die Kugel 5 einwirkenden Kraft im Bereich ihrer Elastizität verformt werden. Dadurch werden mehrere konzentrische Abdichtungen erzeugt, wodurch eine äußerst große Dichtheit beziehungsweise äußerst geringe Leckrate erreicht wird. Ein Kriechen des Mediums von innen nach außen durch die Riefen als Folge eines chaotischen oder spiralförmigen Verlaufs der Riefen 6 ist nicht mehr möglich.

In Figur 5 ist ein Werkzeug 8 zur Feinbearbeitung des Ventilsitzes 4 gezeigt. Der Verfahrensschritt der Feinbearbeitung ist ein Honschleifen, das nachstehend noch näher erläutert ist. Das Werkzeug 8 umfasst einen Werkzeugkopf 9 und eine Werkzeugaufnahme 10, wobei letztere an dem dem Werkzeugkopf 9 entgegengesetzten Ende eines Werkzeugschaftes 11 angeordnet ist. Der Werkzeugkopf 9 hat eine kegelige Mantelfläche 15, wobei die Form des Kegels derjenigen des Ventilsitzes 4 entspricht. Der Werkzeugkopf 9 ist mit Schneidkorn 12 besetzt, wobei in bekannter Weise als Schneidkorn Diamant, kubisches Bohrnitrit, Siliziumkarbid oder Aluminiumoxyd verwendet wird. Die Mantellinien der kegeligen Arbeitsflächen können gerade (wie in Figur 5), konvex oder konkav sein. Durch konvex gewölbte Konturen der Mantellinien lässt sich die Gratbildung an den Kanten der Sitzfläche reduzieren. Der Kornüberstand, das heißt die Hohe, mit der die Schneidkörner über das sie umgebende Bindungsmaterial hervorragen, ist so bemessen, dass die Profiltiefe der am Ventilsitz erzeugten Riefen 6 derart ist, dass die zwischen ihnen sich ausbildenden Profilerhebungen 7 bei Kontakt mit einem Ventilschließglied 5 sich elastisch so verformen, dass die oben beschriebene Abdichtung und auch ein Ausgleich des Rundheitsfehlers erfolgt.

Figur 6 zeigt einen Längsschnitt durch das Werkzeug 8, woraus ersichtlich ist, dass sich in dem Werkzeugkörper ein Kanal 13 für Kühl- und/oder Schmiermittel befindet, der mehrere Auslässe 14 im Bereich der kegeligen Fläche 15 besitzt.

Die Figur 7 zeigt eine vergrößerte Darstellung eines Abschnitts der kegeligen Arbeitsfläche 15 des kegeligen Werkzeugs 8. Es ist ersichtlich, dass an der Außenseite eine Vielzahl von Schneidkörnern 12 eingelagert sind. Ebenso sind Längsschlitze 20 erkennbar, die zur Versorgung der Bearbeitungsstelle mit Kühlschmierstoff vorgesehen sind.

Der Ventilsitz 4 wird zunächst vorbearbeitet, zum Beispiel gehärtet und spanend bearbeitet. Die spanende Bearbeitung nach dem Härten kann bei geringen Härteverzugen auch entfallen. Danach erfolgt die Feinbearbeitung mit Hilfe des in Figur 5 bis 7 gezeigten Werkzeugs 8. Die Kinematik des Verfahrens besteht in der Rotation des Werkzeugs unter Anlage der Arbeitsfläche 15 des Werkzeugs an der kegeligen Fläche, die nach Bearbeitung den Ventilsitz 4 bildet.

Das Werkzeug 8 wird entsprechend dem fortschreitenden Abtrag axial nachgeführt. Dabei ist es vorteilhaft, das Werkzeug periodisch außer Arbeitseingriff zu bringen, um die Bearbeitungsstelle mit Kühlschmierstoff zur Kuhlung, Spülung und Schmierung anzuströmen. Dies ist mittels einer Stelleinrichtung des Werkzeugs sowohl kraft- als auch weggeführt möglich. Die axiale Zustellkraft des Werkzeugs wird prozessgerecht gesteuert und damit auch die Abtragshöhe werden überwacht. Eine Anlage des Werkzeugs durch Federkraft ist grundsätzlich auch möglich. Die Feinbearbeitung wird in mehreren Operationen als Honschleifen der Kegelsitze durchgeführt. In jeder Operation werden die Form- und Rauhheitsprofile von der vorhergehenden Honschleifoperation mit einem feineren Schneidkorn vollständig abgetragen. Die letzte Operation dient zur Schaffung eines - wie oben beschrieben - funktionsgerechten Oberflachenprefils. Die vorausgehenden Operationen dienen zum Abtragen des Formfehlers der Vorbearbeitung. Dies führt sukzessiv zu feineren Oberflächen. Aufgrund der Kinematik entstehen die in den Figuren 2 bis 4 dargestellten konzentrischen Riefen 6 und die zwischen den Riefen befindlichen Profilerhebungen 7. Nach der Honschleifbearbeitung erfolgt noch ein Entgraten, bei dem zum Beispiel mit Diamantsplintentgratwerkzeugen und/oder schleifkornhaltigen Bürsten gearbeitet wird.

Die Steuerung der Zustellung kann beispielsweise durch eine elektromechanische Stelleinrichtung erfolgen. Zunächst fährt die Spindeleinheit im Eilvorlauf in die axiale Nähe der künftigen Arbeitsposition. Damit befindet sich das Werkzeug kurz vor dem Werkstuck, wobei dieser Sicherheitsabstand von der Spindel mit geringer Geschwindigkeit durchfahren wird. Sobald das Werkzeug an die Bearbeitungsfläche des Werkstucks stoßt, steigt die axiale Anlagekraft auf den gewunschten Arbeitswert an. Diese Position wird auf "0" gesetzt und das Werkzeug in Rotation versetzt, so dass der Bearbeitungsmodus gestartet wird. Der Abtrag in axialer Richtung wahrend einer Bearbeitungsoperation soll sich in der vorgegebenen Taktzeit vollziehen. Die Steuerung der Stelleinrichtung ermittelt den Abtrag sowie die dazu benötigte Zeit beziehungsweise die Bearbeitungsgeschwindigkeit. Wird der Sollabtrag in der gewünschten Zeit nicht erreicht, dann erhoht sich automatisch die Kraft bei der Bearbeitung des nächsten Werkstücks.

Das vorstehend beschriebene Verfahren ermöglicht die Herstellung von Ventilsitzflächen mit hohen Dichtheiten durch die Topographie des Rauhheitsprofils und durch die damit erzielten äußerst geringen Rundheitsabweichungen des Ventilsitzes 4.

Grundsätzlich kann man, wie sonst beim Honen auch, einen einschichtigen Diamantbelag oder einen cBN-Schneidbelag (cBN = kubisches Bornitrit) verwenden. Beide sind mit einer galvanischen Bindung aufgebaut. Der Verschleißmechanismus eines solchen einschichtigen galvanischen Schneidbelages besteht darin, dass aus einer Nickelmatrix Schneidkristalle erhaben herausragen und so spanabhebend im Werkstuck zum Einsatz kommen. Nachteilig daran ist allerdings, dass die Schneidkristalle mit zunehmendem Gebrauch abstumpfen. Die Zustellkraft muss daher, um jeweils gleiche Eindringtiefe zu erreichen, stets erhöht werden. Das Werkzeug ist endgültig verschlissen, wenn die erhabenen Schneidkristalle weitgehend abgetragen sind.

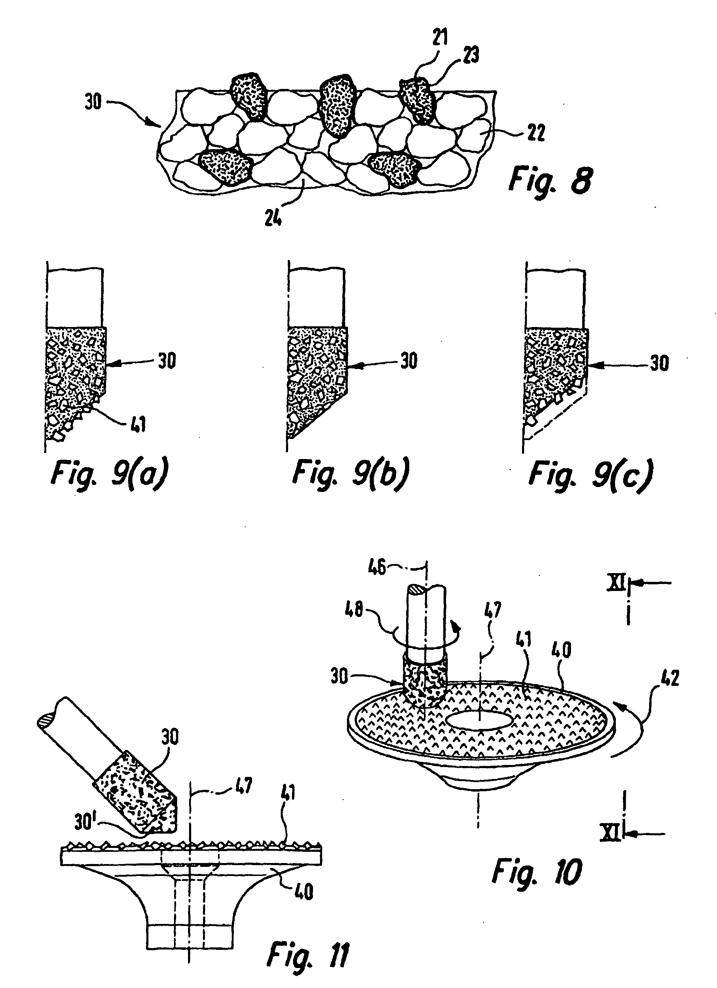

Bei einem mehrschichtigen Belag hingegen sind die Schneidkristalle dreidimensional in einer Bindematrix angeordnet. Es handelt sich dabei meist um gesinterte oder durch Hoch-Vakuum-Löten (HVL) hergestellte metallische Bindungen mit Diamant- oder cBN-Korn. Figur 8 zeigt den Aufbau eines solchen HVL-Schneidkörpers 30 aus Schneidkristallen 21, mineralischen Füllstoffpartikeln 22, Lötverbindungen 23 und einer metallischen Bindephase 24, zum Beispiel Silberlot.

Der umlaufenden Schnittspur entsprechend, die durch die Werkzeugkinematik vorgegeben ist, entsteht beim Schleifen kein Selbstschärfungseffekt, allenfalls bei einem Drehrichtungswechsel. Bei einem mehrschichtigen Belag muss man daher in bestimmten zeitlichen Abständen durch einen Abrichtvorgang die Bindung zurücksetzen. Figur 9(a) zeigt den nicht abgenutzten Schneidkörper, Figur 9(b) den abgenutzten Schneidkörper, der abgerichtet werden muss.

Die Figuren 10 und 11 zeigen einen derartigen Abrichtvorgang. Demgemäß ist eine Abrichtscheibe 40 vorgesehen, in deren Belag Diamantkristalle 41 eingelagert sind. Die Abrichtscheibe 40 wird in Richtung des Pfeiles 42 durch eine Antriebseinrichtung (nicht gezeigt) gedreht.

Der mit einem Schneidbelag 41 versehene Schneidkörper 30 hat beim Abrichten mit seiner Drehachse 46 gegenüber der Drehachse 47 der Abrichtscheibe 40 eine Schrägstellung entsprechend dem angestrebten Kegelwinkel des Werkzeugs. Der Schneidkörper 30 wird, wie durch den Pfeil 48 angedeutet, so gedreht, dass sein kegeliger Schneidbelag 30' an der Stelle seiner Berührung mit der Abrichtscheibe 40 zu dieser gegenläufig bewegt wird. Figur 9(c) zeigt den abgerichteten und damit neu angeschärften Schneidkörper 30 (die ursprüngliche Kontur ist gestrichelt eingezeichnet).

Bei mehrschichtigen Schleifwerkzeugen mit Diamant- oder cBN-Korn werden als Abrichtscheiben 40 keramische Scheiben mit einer Korngröße, die kleiner als die Korngröße des Werkzeuges ist, und einer Schnittgeschwindigkeit von 1 - 3 m/s verwendet. Keramisch gebundene Siliciumkarbid- oder Korund-Werkzeuge werden dagegen mit einer Diamantscheibe abgerichtet, deren Korngröße D 181 - D 426 beträgt.

Figur 12 zeigt ein Werkzeug fur die Bearbeitung von kegelige Ventilsitzes 55, bei denen auch - als Folge nicht vollkommen exakt möglicher Herstellung - noch eine gewisse Schräglage der Achse LA des Ventilsitzes 55 gegenüber der Drehachse 60 um einen Winkel α gegeben ist. Die Drehachse 60 ist die Achse, um die das Werkzeug 51, das mit seinem Ende 61 in einer Werkzeugaufnahme (nicht gezeigt) eingespannt ist, von dieser gedreht wird. Um die Schräglage α auszugleichen, weist das Werkzeug 51 in Form einer Einschnürung ein Biegegelenk 50 auf, das während der Drehung eine Anpassung des Schneidkörpers 52 an den Ventilsitz erlaubt. Dabei sei darauf hingewiesen, dass der Winkel α normalerweise im Bereich weniger Winkelminuten liegt. Das kann durch eine elastische Biegung um eine solche Sollbiegestelle kompensiert werden.

Figur 13 zeigt ein ebenfalls weiteres Ausführungsbeispiel, bei dem das Werkzeug 71 mit einem Biegegelenk 70 versehen ist, das am unteren Ende des Schneidkörpers 72 angebracht ist. Die Besonderheit dieses Ausführungsbeispiels ist ferner, dass hier die Fläche des Ventilsitzes 75, die den Kanal 73 umgibt, eben ist. Auch hier entstehen konzentrische Riefen und dazwischen Profilerhebungen, die dazu geeignet sind, sich beim Anliegen eines ebenen Ventilschließgliedes 74 mit ebener Fläche elastisch zu verformen und konzentrische praktisch linienförmige Dichtflächen zu bilden. Für ein einwandfreies Funktionieren des Ventils ist wichtig, dass das Werkzeug die gesamte Ventilsitzflache überdeckt und dass - anders als beim Schleifen - keine Vorschubbewegung parallel zur zu bearbeitenden Ventilsitzfläche stattfindet, da sonst keine konzentrischen Riefen und Profilerhebungen erzeugt werden.

Entsprechend den Auslenkhebelverhältnissen ist bei dem Planwerkzeug nach Figur 13 das Biegegelenk 70 möglichst weit unten angeordnet, während es bei dem Werkzeug mit kegeligem Schneidkörper, zum Beispiel nach Figur 12, da diese durch eine horizontale Normalkraft ausgelenkt werden, möglichst weit oben angeordnet ist.

## Patentansprüche

1. Ventil mit einem Ventilsitz, der für das zu steuernde Medium mit einem Kanal durchsetzt ist, **dadurch gekennzeichnet, dass** die Fläche (4, 55, 75) des Ventilsitzes (4) mehrere konzentrisch verlaufende Riefen (6) mit zwischen diesen ausgebildeten Profilerhebungen (7) aufweist, wobei die durch die Riefen und die Profilerhebungen gegebene Rauhheit der Fläche des Ventilsitzes größer ist als die Rauhheit der Fläche des Ventilschließgliedes, und die Spitzen der Profilerhebungen (7) beim Schließen des Ventils durch dieses elastisch verformbar sind und eine Vielzahl konzentrischer Dichtflächen bilden.

2. Ventil nach Anspruch 1, **dadurch gekennzeichnet, dass** die Rauhheit (R_{z}) der Fläche des Ventilsitzes < 8 µm beträgt.

3. Ventil nach Anspruch 1 oder 2, **dadurch gekennzeichnet, dass** die Rauhheit der Fläche des Ventilsitzes (R_{z}) ca. 1 µm beträgt.

4. Ventil nach einem der Ansprüche 1 - 3, **dadurch gekennzeichnet, dass** die Fläche des Ventilsitzes (4, 55) die sich verjüngende konische Form eines Kegels hat.

5. Ventil nach einem der Ansprüche 1 - 4, **dadurch gekennzeichnet, dass** die Riefen (6) und Profilerhebungen (7) auf der Fläche des Ventilsitzes durch Honen ohne parallel zu dieser Flache stattfindendem Vorschub erzeugt werden.

6. Ventil nach einem der Ansprüche 1 - 5, **dadurch gekennzeichnet, dass** beim Honen die Fläche des Honwerkzeugs die gesamte Fläche des Ventilsitzes, der beim Schließen des Ventils mit dem Ventilschließglied in Kontakt kommt, überdeckt.

7. Ventil nach einem der Ansprüche 1 - 6, **dadurch gekennzeichnet, dass** das Ventilschließglied eine Kugel (5) ist.

8. Ventil nach einem der Ansprüche 1 - 6, **dadurch gekennzeichnet, dass** das Ventilschließglied (74) eine ebene Dichtfläche (74') aufweist.

9. Ventil nach einem der Ansprüche 4 - 7, **dadurch gekennzeichnet, dass** die Rundheitsgenauigkeit der Profilerhebungen (7) beziehungsweise der Riefen (6) ≤ 2,0 µm beträgt.

10. Ventil nach Anspruch 8, **dadurch gekennzeichnet, dass** die Ebenheitsgenauigkeit der Profilerhebungen < 4 µm beträgt.

11. Verfahren zur Herstellung eines Ventilsitzes (4, 55, 75), der eine Ventilsitzflache aufweist, die in einem Bearbeitungsschritt einer Feinbearbeitung unterworfen wird und in einem Ventil mit einem Ventilschließglied zusammenwirkt, **dadurch gekennzeichnet, dass** die Feinbearbeitung ein Honschleifen ist und mittels eines Werkzeugs (8) durchgeführt wird, das an seinem Werkzeugkopf (9) entsprechend der Ventilsitzfläche gestaltet ist, wobei das Werkzeug (8) rotierend angetrieben wird, und mittels am Werkzeugkopf (9) befindlichem Schneidkorn (12) auf der Ventilsitzflache konzentrisch verlaufende Bearbeitungsriefen (6) erzeugt werden, wobei der Kornüberstand am Werkzeugkopf (9) so bemessen ist, dass die Profiltiefe so groß ist, dass eine elastische Verformung der zwischen den Bearbeitungsriefen (6) sich ausbildenden Profilerhebungen (7) bei Anliegen eines Ventilschließgliedes an der Ventilsitzfläche mehrere schmale konzentrische Dichtflächen erzeugt.

12. Verfahren nach Anspruch 11, **dadurch gekennzeichnet, dass** der Ventilsitz (4, 55) eine kegelige Form aufweist, wobei zunächst die kegelige Grundform in einem Bearbeitungsschritt erzeugt wird und später in einem weiteren Bearbeitungsschritt einer Feinbearbeitung des Ventilsitzes (4) an der Kegelform erfolgt, **dadurch gekennzeichnet, dass** die Feinbearbeitung ein Honschleifen ist und mittels eines Werkzeugs (8) durchgeführt wird, das an seinem Werkzeugkopf (9) kegelformfüllend gestaltet und mit Mitteln zur Kühlschmierstoffzufuhr (13, 14) versehen ist, wobei das Werkzeug (8) rotierend angetrieben wird und mittels am Werkzeugkopf (9) befindlichem Schneidkorn (12) auf der Ventilsitzfläche konzentrisch zur Kegelform verlaufende Bearbeitungsriefen (6) erzeugt werden, wobei der Kornüberstand am Werkzeugkopf (9) so bemessen ist, dass die Profiltiefe so groß ist, dass eine elastische Verformung zum Ausgleich des Rundheitsfehlers fuhrt.

13. Verfahren nach Anspruch 11 oder 12, **dadurch gekennzeichnet, dass** das Honschleifen in mindestens zwei aufeinander folgenden Operationen durchgefuhrt wird.

14. Verfahren nach Anspruch 13, **dadurch gekennzeichnet, dass** in jeder Operation die Rauhheitsprofile von der vorhergehenden Honschleifoperation mit einem Werkzeug (8) mit feinerem Schneidkorn abgetragen werden.

15. Verfahren nach einem der Anspruche 11 bis 14, **dadurch gekennzeichnet, dass** das Werkzeug (8) periodisch außer Arbeitseingriff gebracht und die Bearbeitungsstelle mit Kuhlschmierstoff angestromt wird.

16. Verfahren nach einem der Ansprüche 11 bis 15, **dadurch gekennzeichnet, dass** beim Honschleifen das Werkzeug (8) mit einer Drehzahl von 250 min⁻¹ bis 6000 min⁻¹ rotiert.

17. Verfahren nach einem der Ansprüche 11 bis 16, **dadurch gekennzeichnet, dass** im Anschluss an die Honschleifbearbeitung eine Entgratbearbeitung erfolgt, insbesondere mit Diamantsplintwerkzeugen und/oder schleifkornhaltigen Bürsten.

18. Verfahren nach einem der Ansprüche 11 bis 17, **dadurch gekennzeichnet, dass** im Bearbeitungsschritt der Feinbearbeitung eine axiale Zugabe des Materials am Ventilsitz (4) von ca. 20 µm bis 90 µm abgetragen wird.

19. Verfahren nach einem der Ansprüche 11 bis 18, **dadurch gekennzeichnet, dass** während des Honschleifens der zum Ausgleich einer Schräglage der Längsachse (LA) des Ventilsitzes das Werkzeug (51, 71) während er Bearbeitung mittels eines in seinem Schaft vorgesehenen Biegegelenks (50, 70) ausgelenkt wird.

20. Verfahren nach Anspruch 19, **dadurch gekennzeichnet, dass** das Biegegelenk durch eine Einschnürung des Schaftes des Werkzeugs gebildet ist und die Auslenkung durch elastische Verformung des Biegegelenks erfolgt.

21. Verfahren nach einem der Anspruche 11 bis 20, **dadurch gekennzeichnet, dass** beim Honschleifen das Werkzeug (8) und das Werkstück gegenläufig angetrieben werden.

22. Verfahren nach einem der Ansprüche 11 - 21, **dadurch gekennzeichnet, dass** mehrschichtige Werkzeuge verwendet werden, bei denen das Schneidkorn keramisch gebunden ist, und das Abrichten der Werkzeuge mittels einer planen Abrichtscheibe erfolgt, gegenüber deren Flache das Werkzeug um den Winkel der mit ihm zu bearbeitenden Kegelform schräg eingestellt wird, und dass beim Abrichten Werkzeug und Abrichtscheibe gegenlaufig angetrieben werden.

## Claims

1. Valve, having a valve seat through which a passage for the medium to be controlled passes, **characterised in that** the surface (4, 55, 75) of the valve seat (4) has a plurality of concentrically extending furrows (6) having profiled elevations (7) formed between them, the roughness of the surface of the valve seat which is produced by the furrows and the profiled elevations being greater than the roughness of the surface of the valve closure-member and, when the valve closes, the peaks of the profiled elevations (7) being elastically deformable by the valve and forming a plurality of concentric sealing surfaces.

2. Valve according to claim 1, **characterised in that** the roughness (R_{z}) of the surface of the valve seat is < 8 µm.

3. Valve according to either of claims 1 and 2, **characterised in that** the roughness (R_{z}) of the surface of the valve seat is approx. 1 µm

4. Valve according to one of claims 1 - 3, **characterised in that** the surface of the valve seat (4, 55) is in the conically tapering form of a cone.

5. Valve according to one of claims 1 - 4, **characterised in that** the furrows (6) and profiled elevations (7) are produced on the surface of the valve seat by honing without any feed taking place parallel to said surface.

6. Valve according to one of claims 1 - 5, **characterised in that**, in the honing, the surface of the honing tool covers the entire area of the valve seat, which latter comes into contact with the valve closure-member when the valve closes.

7. Valve according to one of claims 1 - 6, **characterised in that** the valve closure-member is a ball (5).

8. Valve according to one of claims 1 - 6, **characterised in that** the valve closure-member (74) has a plane sealing surface (74').

9. Valve according to one of claims 4 - 7, **characterised in that** the profiled elevations (7) and the furrows (6) are circular to an accuracy of ≤ 2 µm.

10. Valve according to claim 8, **characterised in that** the profiled elevations are plane to an accuracy of < 4 µm.

11. Method of producing a valve seat (4, 55, 75) which has a valve-seat surface which is subjected to fine finishing in a stage of machining and which co-operates with a valve closure-member in a valve, **characterised in that** the fine finishing is honing and is carried out by means of a tool (8) which is shaped, at its tip (9), to match the valve-seat surface, the tool (8) being driven in rotation and concentrically extending machined furrows (6) being produced in the valve-seat surface by means of abrasive (12) situated on the tool tip (9), the projection of the abrasive from the tool tip (9) being of a size such that the depth of the profiling is sufficiently large for an elastic deformation of the profiled elevations (7) which form between the machined furrows (6) to produce a plurality of narrow, concentric sealing surfaces when a valve closure-member bears against the valve-seat surface.

12. Method according to claim 11, **characterised in that** the valve seat (4, 55) is of a conical shape, the basic conical shape being produced first in one machining step and fine finishing of the valve seat (4) subsequently being applied to the conical shape in a further machining step, **characterised in that** the fine finishing is honing and is carried out with a tool (8) which is of a male conical shape at its tip (9) and is provided with means (13, 14) for the infeed of a cooling lubricant, the tool (8) being driven in rotation and machined furrows (6) extending concentrically to the conical shape being produced in the valve-seat surface by means of abrasive (12) situated on the tool tip (9), the projection of the abrasive from the tool tip (9) being of a size such that the depth of the profiling is sufficiently large for an elastic deformation to result in the error in circularity being corrected.

13. Method according to claim 11 or 12, **characterised in that** the honing is carried out in at least two successive operations.

14. Method according to claim 13, **characterised in that**, in each operation, the roughness profiles from the preceding operation are abraded by a tool (8) having a finer abrasive.

15. Method according to one of claims 11 to 14, **characterised in that** the tool (8) is brought out of working engagement cyclically and the machining area is flushed with cooling lubricant.

16. Method according to one of claims 11 to 15, **characterised in that**, in the honing, the tool (8) rotates at a speed from 250 min⁻¹ to 6000 min⁻¹.

17. Method according to one of claims 11 to 16, **characterised in that**, following the honing machining, deburring machining takes place, particularly with diamond-chip tools and/or brushes carrying abrasive.

18. Method according to one of claims 11 to 17, **characterised in that**, in the fine finishing machining step, an axial allowance of material at the valve seat (4) of approx. 20 µm to 90 µm is abraded.

19. Method according to one of claims 11 to 18, **characterised in that**, during the honing, to compensate for the longitudinal axis (LA) of the valve seat being in an oblique position, the tool (51, 71) is deflected during the machining by means of an articulation for bending (50, 70) provided in its shank.

20. Method according to claim 19, **characterised in that** the articulation for bending is formed by a constriction of the shank of the tool and the deflection takes place by means of elastic deformation of the articulation for bending.

21. Method according to one of claims 11 to 20, **characterised in that**, in the honing, the tool (8) and the workpiece are driven in opposite directions.

22. Method according to one of claims 11 to 21, **characterised in that** multi-layered tools are used in which the abrasive has a ceramic binder, and the dressing of the tools is performed with a plane dressing wheel relative to whose surface the tool is set obliquely at the angle of the conical shape to be machined by it, and **in that** the tool and the dressing wheel are driven in opposite directions in the dressing.

## Revendications

1. Soupape comportant un siège de soupape qui est traversé par un canal pour le fluide à commander, **caractérisée en ce que** la surface (4, 55, 75) du siège de soupape (4) comprend plusieurs rainures concentriques (6) avec des bossages profilés (7) réalisés entre celles-ci, la rugosité définie par les rainures et par les bossages profilés de la surface du siège de soupape étant supérieure à la rugosité de la surface de l'obturateur de soupape, et lors de la fermeture de la soupape les sommets des bossages profilés (7) sont élastiquement déformables par celle-ci et forment une multitude de surfaces d'étanchéité concentriques.

2. Soupape selon la revendication 1, **caractérisée en ce que** la rugosité (R_{z}) de la surface du siège de soupape est < 8 µm.

3. Soupape selon l'une ou l'autre des revendications 1 et 2, **caractérisée en ce que** la rugosité de la surface du siège de soupape (R_{z}) est d'environ 1 µm.

4. Soupape selon l'une des revendications 1 à 3, **caractérisée en ce que** la surface du siège de soupape (4, 55) présente la forme conique en rétrécissement d'un cône.

5. Soupape selon l'une des revendications 1 à 4, **caractérisée en ce que** les rainures (6) et les bossages profilés (7) sont réalisés sur la surface du siège de soupape par rodage sans qu'il y ait d'avance parallèle à cette surface.

6. Soupape selon l'une des revendications 1 à 5, **caractérisée en ce que** lors du rodage, la surface de l'outil de rodage recouvre la totalité de la surface du siège de soupape qui vient en contact avec l'obturateur de soupape lors de la fermeture de la soupape.

7. Soupape selon l'une des revendications 1 à 6, **caractérisée en ce que** l'obturateur de soupape est une bille (5).

8. Soupape selon l'une des revendications 1 à 6, **caractérisée en ce que** l'obturateur de soupape (74) présente une surface étanche plane (74').

9. Soupape selon l'une des revendications 4 à 7, **caractérisée en ce que** la précision de rondeur des bossages profilés (7) ou des rainures (6) est ≤ 2,0 µm.

10. Soupape selon la revendication 8, **caractérisée en ce que** la précision de planéité des bossages profilés est < 4 µm.

11. Procédé pour réaliser un siège de soupape (4, 55, 75) qui présente une surface de siège de soupape qui est soumise à un usinage fin dans une passe d'usinage et qui coopère avec un obturateur de soupape dans une soupape, **caractérisé en ce que** l'usinage fin est une rectification-rodage et s'effectue au moyen d'un outil (8) dont la tête d'outil (9) est réalisée en correspondance de la surface de siège de soupape, l'outil (8) étant entraîné en rotation, et des rainures d'usinage (6) s'étendant concentriquement sur la surface de siège de soupape sont générées au moyen d'une plaquette de coupe (12) située sur la tête d'outil (9), le dépassement de la plaquette sur la tête d'outil (9) étant dimensionné de telle sorte que la profondeur du profil est aussi importante qu'une déformation élastique des bossages profilés (7) qui se forment entre les rainures d'usinage (6) génère plusieurs surfaces étanches concentriques étroites lorsque l'obturateur de soupape vient en appui contre la surface de siège de soupape.

12. Procédé selon la revendication 11, **caractérisé en ce que** le siège de soupape (4, 55) présente une forme conique, procédé dans lequel on réalise tout d'abord la forme de base conique dans une passe d'usinage et ensuite, dans une autre passe d'usinage, on exécute un usinage fin du siège de soupape (4) au niveau de la forme conique, **caractérisé en ce que** l'usinage fin est une rectification-rodage et s'effectue au moyen d'un outil (8) dont la tête d'outil (9) est réalisée de manière à remplir une forme conique et est pourvue de moyens pour l'alimentation en lubrifiant/réfrigérant (13, 14), l'outil (8) étant entraîné en rotation, et des rainures d'usinage (6) s'étendant concentriquement sur la surface de siège de soupape sont générées au moyen d'une la plaquette de coupe (12) située sur la tête d'outil (9), le dépassement de la plaquette sur la tête d'outil (9) étant dimensionné de telle sorte que la profondeur du profil est aussi importante qu'une déformation élastique mène à une compensation du défaut de rondeur.

13. Procédé selon l'une ou l'autre des revendications 11 et 12, **caractérisé en ce que** la rectification-rodage s'effectue dans au moins deux opérations successives.

14. Procédé selon la revendication 13, **caractérisé en ce que** dans chaque opération, les profils de rugosité de l'opération de rectification-rodage précédente sont enlevés par un outil (8) à plaquette de coupe plus fine.

15. Procédé selon l'une des revendications 11 à 14, **caractérisé en ce que** l'outil (8) est dégagé périodiquement de son engagement de travail et **en ce que** l'emplacement d'usinage est attaqué par l'agent lubrifiant/réfrigérant.

16. Procédé selon l'une des revendications 11 à 15, **caractérisé en ce que** lors de la rectification-rodage, l'outil (8) tourne à une vitesse de rotation de 250 min⁻¹ à 6000 min⁻¹.

17. Procédé selon l'une des revendications 11 à 16, **caractérisé en ce que** suite à la rectification-rodage s'effectue un usinage d'ébavurage, en particulier par des outils au diamant et/ou par des brosses contenant des grains abrasifs.

18. Procédé selon l'une des revendications 11 à 17, **caractérisé en ce que** dans la passe d'usinage fin, on enlève un excédent axial du matériau sur le siège de soupape (4) d'environ 20 µm à 90 µm.

19. Procédé selon l'une des revendications 11 à 18, **caractérisé en ce que** pendant la rectification-rodage, afin de compenser une position en oblique de l'axe longitudinal (LA) du siège de soupape, l'outil (51, 71) est dévié pendant l'usinage au moyen d'une articulation à flexion (50, 70) prévue dans sa tige.

20. Procédé selon la revendication 19, **caractérisé en ce que** l'articulation à flexion est formée par un rétrécissement de la tige de l'outil et **en ce que** la déviation s'effectue par déformation élastique de l'articulation à flexion.

21. Procédé selon l'une des revendications 11 à 20, **caractérisé en ce que** lors de la rectification-rodage, l'outil (8) et la pièce à oeuvrer sont entraînés en sens opposés.

22. Procédé selon l'une des revendications 11 à 21, **caractérisé en ce que** l'on utilise des outils à plusieurs couches dans lesquels la plaquette de coupe est liée par voie céramique, et le dressage des outils s'effectue au moyen d'un disque de dressage plan présentant une surface par rapport à laquelle l'outil est réglé en oblique de l'angle de la forme conique à usiner avec celui-ci, et **en ce que** lors du dressage l'outil et le disque de dressage sont entraînés en sens opposés.
